# EUROPEAN PATENT SPECIFICATION

(11) **EP 3 028 880 B1**
(45) Date of publication and mention of the grant of the patent: **31.01.2018**
(21) Application number: 15196859.1
(22) Date of filing: 27.11.2015
(51) Int. Cl.: B60C 23/04, B60C 23/06, B60W 30/04

(54) **TIRE LIFT-OFF PROPENSITY PREDICTIVE SYSTEM AND METHOD**
REIFENABHEBENEIGUNGSPROGNOSESYSTEM UND VERFAHREN
SYSTÈME PRÉDICTIF DE PROPENSION DE SOULÈVEMENT DE PNEUMATIQUE ET PROCÉDÉ

(30) Priority: 03.12.2014 US 201414558783
(43) Date of publication of application: 08.06.2016
(73) Proprietor: The Goodyear Tire & Rubber Company, Akron, Ohio 44316 (US)
(72) Inventor: SINGH, Kanwar Bharat, Stow, OH Ohio 44224 (US); PARSONS, Anthony Wiliam, 1466 Dommeldange (LU); ENGEL, Marc, L-7788 Bissen (LU)
(74) Representative: Kutsch, Bernd

(56) References cited:
- DE-A1-102006 033 951
- DE-A1-102006 043 505
- DE-A1-102007 010 780
- DE-A1-102010 007 008

## Description

### Field of the Invention

The invention relates generally to tire monitoring systems for collecting measured tire parameter data during vehicle operation and, more particularly, to systems utilizing such tire sensor-based data in vehicle control systems.

### Background of the Invention

Under certain conditions, a vehicle tire may encounter a propensity to lift-off from a road surface. Lift-off may be caused by the tire hydroplaning during operation of the vehicle. Hydroplaning can occur when the contact patch created by a vehicle tire and a road surface is reduced in area due to the presence of moisture. In order to reduce hydroplaning, a reduction in travel speed of the vehicle is generally recommended. There is a need for a durable and robust system and method for advising a vehicle operator when conditions for tire lift-off exist so that a reduction in vehicle speed may be effected.

DE 10 2010 007008 A1, DE 10 2007 010780 A1, DE 10 2006 043505 A1 and DE 10 2006 033951 A1, according to the preamble of device claim 1, each describe a lift-off propensity predictive system and method wherein the estimating means/steps of the system and method are in response to tire specific parameters such as tire pressure and vehicle speed.

### Summary of the Invention

The invention relates to a system in accordance with claim 1 and to a method in accordance with claim 8.

Dependent claims refer to preferred embodiments of the invention.

In a preferred aspect of the invention, a system and method for predicting tire lift-off propensity includes a vehicle tire-affixed tire-identification device for providing a tire-specific identification, multiple tire-affixed sensors mounted to the tire measuring tire-specific parameters and generating tire-specific parameter information, one or more vehicle-affixed sensor(s) mounted to the vehicle to measure vehicle speed and a lift-off propensity estimator generating a lift-off propensity for the vehicle tire a database containing experimentally-derived, tire-ID specific, lift-off propensities correlated to measured tire-specific parameter information and measured vehicle speeds.

In another preferred aspect of the invention, the tire-specific parameter information is one or more parameters from the group: a load estimation for the vehicle tire, air pressure within a cavity of the vehicle tire and a wear estimation for a tread region of the vehicle tire.

The lift-off propensity predictive system, in a further preferred aspect of the invention, calculates the load estimation based upon a vehicle-based hub accelerometer signal.

The lift-off propensity predictive system in another preferred aspect of the invention continuously updates the lift-off propensity of the vehicle tire during movement of the vehicle and uses the updated lift-off propensity in one or more control system(s) of the vehicle such as vehicle speed control.

### Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"Circumferential" means lines or directions extending along the perimeter of the surface of the annular tread perpendicular to the axial direction.

"Dugoff Model" is an empirical tire model providing analytical relations for the longitudinal and lateral forces as functions of the slip angle and slip ratio. It accounts for the coupling between the side and longitudinal forces.

"Lateral" means an axial direction.

"Piezoelectric Film Sensor" a device in the form of a film body that uses the piezoelectric effect actuated by a bending of the film body to measure pressure, acceleration, strain or force by converting them to an electrical charge.

"Radial" and "radially" means directions radially toward or away from the axis of rotation of the tire.

### Brief Description of the Drawings

The invention will be described by way of example and with reference to the accompanying drawings in which:
FIG. 1 is perspective view of a vehicle tire partially sectioned to show attachment of a TPMS sensor module.
FIG. 2 is a graph of tire remaining contact (percent) vs. speed (mph) for a tire at varying tire pressures and varying wear states.
FIG. 3 is an implementation flow diagram of the subject system for predicting tire lift-off propensity.

### Detailed Description of Example Embodiments of the Invention

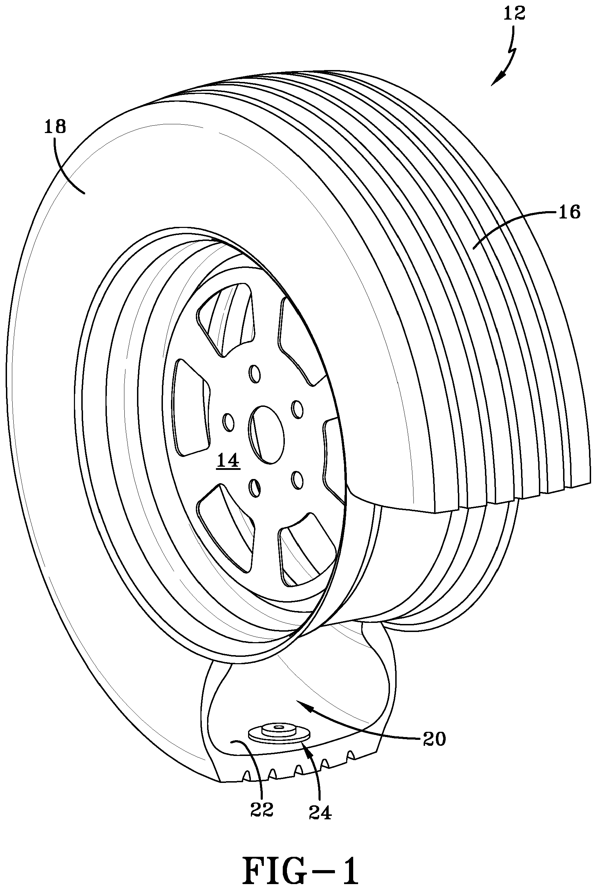

Referring to FIG. 1, a vehicle exemplary tire 12 is shown. The tire 12 is one of several tires supporting a vehicle such as, but not limited to, a passenger automobile. The tire 12 is of conventional construction and is mounted to a wheel 14. The tire 12 has a tread region 16, sidewalls 18, a pressurized air cavity 20 defined by an inner liner 22. A sensor module, prefereably referred herein as tire pressure monitoring sensor (TPMS) module or "device", 24 is mounted to the tire inner liner by suitable means such as adhesive. The TPMS sensor module 24 includes a pressure sensor for measuring the air pressure within cavity 20, temperature of the tire (if desired) and a tire identification transponder programmed to provide a tire-specific identification. The module 24 is further equipped with telemetric transmission capability by which the pressure, temperature and identification information can be sent wirelessly to a remote receiver (not shown) for processing. The module sensors are commercially available and packaged and may be affixed to the inner liner through the use of commercially available adhesive.

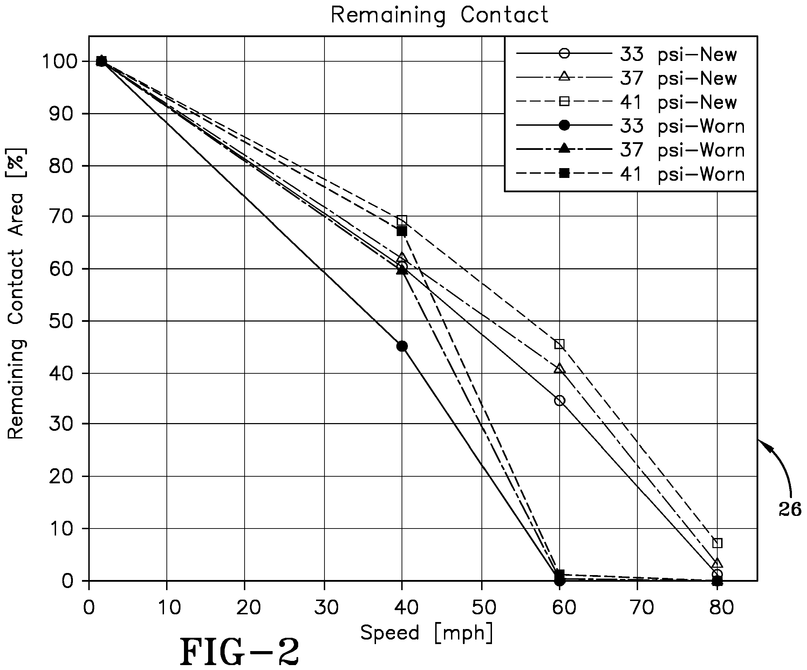

With reference to FIG. 2, a graph 26 of remaining contact area (percent) vs. speed of the vehicle (mph) is shown (1 mph = 1.604 km). The tire 12 makes a road-engaging contact patch as the tire rotates along a road surface. The "contact patch" area is a function of tire inflation pressure, tire loading, vehicle speed, tire construction and the wear state of the tire. The graphs in FIG. 2 demonstrates that variation in tire inflation pressures (33, 37, 41 psi (1 psi = 6895 Pa)) and the wear state (worn vs. new) of the tire tread has a direct influence on the contact area of the tire as it contacts a road surface at speeds ranging from 0 to 80 mph. In general, the greater the inflation pressure, the less contact area is created. The faster a vehicle, and hence the tire, travels, the less contact area is established by the tire against the road surface.

The contact area of the tire is inversely proportional to the lift-off tendency of the tire. That is, the greater the contact area of the tire is against the road surface, the lower the lift-off tendency of the tire from the road surface. "Lift-off tendency" is most commonly experienced and exacerbated when a material or liquid (hydroplaning) is present between the tire and the road surface resulting in a reduction of contact area between the tire the road surface. From the test result graphs of FIG. 2, it will be appreciated that the inflation pressure and tire wear state dependencies are useful for predicting tire lift-off conditions. The loading conditions will also affect the curves of FIG. 2 since the contact patch area changes with tire load. Tire ID Information reveals the particular tire-specific construction of the tire. The tire-specific identification, in turn, makes the curves and algorithms of FIG. 2 tire-specific. "Remaining contact area" curves will change dramatically for a stiff tire vs. a less stiff tire. By identifying the tire and its construction parameters, tire-specific remaining contact area curves may be generated from tire-specific measurement of tire inflation pressure, load and vehicle speed.

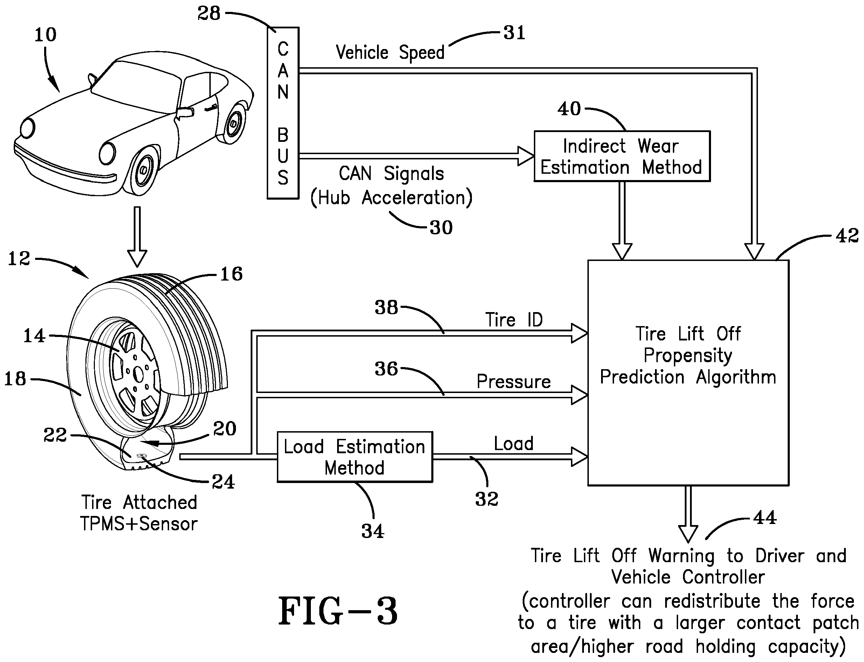

In FIG. 3, an Implementation Flow Diagram of the subject system and method for estimating lift-off propensity is shown. A vehicle 10 is supported by multiple tires 12 configured and described above in reference to FIG. 1. From vehicle-based sensors such as vehicle-mounted accelerometers, vehicle-based information is conveyed to a tire lift-off propensity estimator 42 via the vehicle CAN bus signals 28. Vehicle-based information includes vehicle speed 31 and hub acceleration 30. The CAN signal hub acceleration 30 is input into an indirect wear estimation method 40 that estimates the wear state of the tires.

Tread depth or wear state may be determined directly from tire tread-mounted sensors or from an adaptive indirect tread wear such as the wear estimation method found in US-A-2014/0366618, hereby incorporated by reference in its entirety herein. The wear estimation method of the co-pending application does so "indirectly", that is, without the use of tire mounted tread depth measuring sensors. As such, the difficulty of implementing and maintaining accurate tire-based sensor tread depth measurement is avoided. The indirect tire wear state estimation algorithm utilizes the hub acceleration signal 30 which is accessible via the vehicle CAN bus 28 from vehicle based sensors. The hub acceleration signal is analyzed and an estimation is made as to tread depth or wear. The tread depth used may be the percentage tread wear left or a quantitative value of tread wear depth left on the tire.

From tire-based sensors packaged within the TPMS module 24, tire ID 38, tire cavity inflation pressure 36, and tire load measurement 32 are derived and transmitted for processing to the tire lift-off propensity estimator 42. The load 32 is estimated from a load estimation method 34 incorporating a dynamic tire load estimator configured as presented in US-A-2014/0278040, hereby incorporated herein in its entirety. The tire-based inputs of tire ID, pressure and load constitute tire-based information inputs into the tire lift-off propensity prediction estimator or algorithm 42.

The estimator 42 includes a tire-specific database experimentally derived and based upon a tire ID. From the tire ID, the type of tire construction is known. The tire ID obtained from the TPMS module 24 allows the estimator to identify the tire and recognize the specific type of construction. The reference database utilizes the pressure 36, load estimation 32, vehicle speed 31 and indirect wear estimation 40 to determine the contact patch for the tire. From the contact patch area tire lift-off propensity is concluded by the estimator 42. Should the tire lift-off propensity exceed a preset threshold limit, a warning 44 is generated to the driver of the vehicle and/or the vehicle controller. The driver, being warned of a high lift-off propensity, may take remedial action by reducing the vehicle speed The controller can redistribute the force to a tire with a larger contact patch area (higher road holding capacity) and thereby mitigate the propensity for tire lift-off. By calculating lift-off propensity for each tire, the controller can manage the distribution of force between tires and thereby reduce the potential for lift-off.

From the foregoing, it will be appreciated that the subject system and method achieves a tire lift-off propensity prediction which is both accurate and tire-specific. A vehicle tire-affixed tire-identification device within the module 24 provides a tire-specific identification. Multiple tire-affixed sensors within the module 24 are mounted to the tire to measure and provide certain tire-specific parameters (pressure, load, wear state). Tire-specific parameter information (wear state, pressure, load) are inputs with vehicle-based sensor derived vehicle speed into the estimator 42. The tire lift-off propensity estimator 42 fits the inputs into a database that is based upon tire ID recognition. The estimator 42 generates a lift-off propensity for the vehicle tire based on the recognized tire ID. Lift-off propensities are thereby concluded from a correlation of the specific tire-based parameter information and measured vehicle speeds with the recognized Tire ID.

The tire-specific parameter information combines a load estimation for the vehicle tire, air pressure within a cavity of the vehicle tire and a wear estimation for a tread region of the vehicle tire as inputs into the estimator 42. The lift-off propensity predictive system continuously updates the lift-off propensities of the vehicle tires during movement of the vehicle and uses the updated lift-off propensities in one or more control system(s) of the vehicle such as driver initiated vehicle speed control and/or vehicle controller-driven force distribution between vehicle tires.

## Claims

1. A lift-off propensity predictive system comprising:
a vehicle (10) supported by at least one vehicle tire (12) mounted to a hub, the vehicle tire having a tire cavity (20) and a ground-engaging tread (16), and the tire (12) having a plurality of tire-specific measureable parameters;
a tire-affixed tire-identification device (24) for providing a tire-specific identification;
a plurality of tire-affixed sensors mounted to the tire (12) for operably measuring the tire-specific parameters and generating tire-specific parameter information;
at least one vehicle-affixed sensor mounted to the vehicle for operably measuring vehicle speed (31);
**characterized in that** the system comprises a lift-off propensity estimator (42) for operably generating a lift-off propensity for the one vehicle tire (12) from a database containing experimentally-derived, tire-ID specific, lift-off propensities correlated to measured tire-specific parameter information and measured vehicle speed.

2. The system according to claim 1, wherein the tire-specific parameter information is selected from the group:
a load estimation for the one vehicle tire (12);
air pressure within a cavity (20) of the one vehicle tire (12); and
a wear estimation for a tread region of the one vehicle tire.

3. The system according to claim 2, wherein the load estimation is configured for operably calculating a load estimation based upon a vehicle-based hub accelerometer signal.

4. The system of claim 1, 2 or 3, wherein the system is configured to substantially continuously update the lift-off propensity during an movement of the vehicle (10) and, optionally, wherein the system is configured to operably utilize the updated lift-off propensity in at least one control system of the vehicle (10).

5. The system of claim 4, wherein the at least one control system of the vehicle comprises vehicle speed control.

6. The system according to at least one of the previous claims, wherein the system is configured to utilize a load estimation input for operably calculating a load estimation based upon a vehicle-based hub accelerometer signal.

7. The system according to at least one of the previous claims, wherein the system is configured for continuously updating the estimated lift-off propensity during travel of the vehicle.

8. A method of making a lift-off propensity estimation, the method comprising:
mounting at least one vehicle tire (12) to a vehicle (10), the vehicle tire (12) having a tire cavity (20) and a ground-engaging tread (16), and the tire (12) having a plurality of tire-specific measureable parameters;
affixing to the one vehicle tire (12) a tire identification device providing a tire-specific identification;
affixing at least one vehicle-affixed sensor to the vehicle operably measuring vehicle speed (31);
mounting a plurality of tire-affixed sensors to the tire operably measuring the tire-specific parameters to generate tire-specific parameter information;
inputting the tire-specific parameter information and the tire-specific identification and the vehicle speed into a lift-off propensity estimator (42);
generating a lift-off propensity estimation from the lift-off propensity estimator (42) using a database containing experimentally-derived, tire-ID specific, lift-off propensities correlated to measured tire-specific parameter information and measured vehicle speeds.

9. The method according to claim 8, further comprising including within the tire-specific parameter information a load estimation for the one vehicle tire, air pressure within a cavity (20) of the one vehicle tire (12) and a wear estimation for a tread region of the one vehicle tire (12).

10. The method according to claim 8 or 9, further comprising utilizing a vehicle-based accelerometer signal to generate the load estimation for the one vehicle tire.

11. The method according to claim 8, 9 or 10, further comprising substantially continuously updating the lift-off estimation during an operation of the vehicle to adjust for changes in the tire-specific information.

12. The method according to at least one of the previous claims, further comprising using the updated lift-off estimation in at least one control system of the vehicle.

13. The method according to claim 12, wherein the at least one control system comprises a vehicle speed control system.

## Patentansprüche

1. Abhebeneigungsprognosesystem, umfassend:
ein Fahrzeug (10), das von mindestens einem Fahrzeugreifen (12), der auf einer Nabe montiert ist, getragen wird, wobei der Fahrzeugreifen einen Reifenhohlraum (20) und eine am Boden angreifende Lauffläche (16) aufweist, und wobei der Reifen (12) eine Vielzahl reifenspezifischer messbarer Parameter aufweist;
eine am Reifen angebrachte Reifenidentifikationsvorrichtung (24) zur Bereitstellung einer reifenspezifischen Identifikation;
eine Vielzahl von am Reifen angebrachten Sensoren, die an dem Reifen (12) montiert sind, zum wirksamen Messen der reifenspezifischen Parameter und Generieren von reifenspezifischer Parameterinformation;
mindestens einen am Fahrzeug angebrachten Sensor, der an dem Fahrzeug montiert ist, zum wirksamen Messen von Fahrzeuggeschwindigkeit (31);
**dadurch gekennzeichnet, dass** das System eine Abhebeneigungsschätzungsvorrichtung (42) zum wirksamen Generieren einer Abhebeneigung für den einen Fahrzeugreifen (12) aus einer Datenbank umfasst, die experimentell gewonnene, reifenidentifikationsspezifische Abhebeneigungen enthält, die mit gemessener reifenspezifischer Parameterinformation und gemessener Fahrzeuggeschwindigkeit korreliert sind.

2. System nach Anspruch 1, wobei die reifenspezifische Parameterinformation ausgewählt ist aus der Gruppe:
eine Lastschätzung für den einen Fahrzeugreifen (12);
Luftdruck in einem Hohlraum (20) des einen Fahrzeugreifens (12); und
eine Verschleißschätzung für einen Laufflächenbereich des einen Fahrzeugreifens.

3. System nach Anspruch 2, wobei die Lastschätzung zum wirksamen Berechnen einer Lastschätzung auf Basis eines fahrzeugbasierten Nabenbeschleunigungsmessersignals konfiguriert ist.

4. System nach Anspruch 1, 2 oder 3, wobei das System dazu konfiguriert ist, während einer Bewegung des Fahrzeugs (10) die Abhebeneigung im Wesentlichen kontinuierlich zu aktualisieren, und, optional, wobei das System dazu konfiguriert ist, wirksam die aktualisierte Abhebeneigung in mindestens einem Steuersystem des Fahrzeugs (10) anzuwenden.

5. System nach Anspruch 4, wobei das mindestens eine Steuersystem des Fahrzeugs Fahrzeuggeschwindigkeitsregelung umfasst.

6. System nach mindestens einem der vorhergehenden Ansprüche, wobei das System dazu konfiguriert ist, eine Lastschätzungseingabe zum wirksamen Berechnen einer Lastschätzung auf Basis eines fahrzeugbasierten Nabenbeschleunigungssignals zu nutzen.

7. System nach mindestens einem der vorhergehenden Ansprüche, wobei das System dazu konfiguriert ist, die geschätzte Abhebeneigung während der Fahrt des Fahrzeugs kontinuierlich zu aktualisieren.

8. Verfahren zur Durchführung einer Abhebeneigungsschätzung, wobei das Verfahren umfasst:
Montieren mindestens eines Fahrzeugreifens (12) an einem Fahrzeug (10), wobei der Fahrzeugreifen (12) einen Reifenhohlraum (20) und eine am Boden angreifende Lauffläche (16) aufweist, und wobei der Reifen (12) eine Vielzahl reifenspezifischer messbarer Parameter aufweist;
Anbringen einer Reifenidentifikationsvorrichtung (24), die eine reifenspezifische Identifikation bereitstellt, an dem einen Fahrzeugreifen (12);
Anbringen mindestens eines an dem Fahrzeug angebrachten Sensors, der wirksam die Fahrzeuggeschwindigkeit (31) misst, an dem Fahrzeug;
Montieren einer Vielzahl von am Reifen angebrachter Sensoren, die wirksam die reifenspezifischen Parameter messen, an dem Reifen, um reifenspezifische Parameterinformation zu generieren;
Eingeben der reifenspezifischen Parameterinformation und der reifenspezifischen Identifikation und der Fahrzeuggeschwindigkeit in eine Abhebeneigungsschätzungsvorrichtung (42);
Generieren einer Abhebeneigungsschätzung von der Abhebeneigungsschätzungsvorrichtung (42) unter Anwendung einer Datenbank, die experimentell gewonnene, reifenidentifikationsspezifische Abhebeneigungen enthält, die mit gemessener reifenspezifischer Parameterinformation und gemessenen Fahrzeuggeschwindigkeiten korreliert sind.

9. Verfahren nach Anspruch 8, weiter das in der reifenspezifischen Parameterinformation Einbeziehen einer Lastschätzung für den einen Fahrzeugreifen, des Luftdrucks in einem Hohlraum (20) des einen Fahrzeugreifens (12) und einer Verschleißschätzung für einen Laufflächenbereich des einen Fahrzeugreifens (12) umfassend.

10. Verfahren nach Anspruch 8 oder 9, weiter das Nutzen eines fahrzeugbasierten Beschleunigungsmessersignals zum Generieren der Belastungsschätzung für den einen Fahrzeugreifen umfassend.

11. Verfahren nach Anspruch 8, 9 oder 10, weiter das im Wesentlichen kontinuierliche Aktualisieren der Abhebeschätzung während eines Betriebs des Fahrzeugs zur Anpassung an Veränderungen in der reifenspezifischen Information umfassend.

12. Verfahren nach mindestens einem der vorhergehenden Ansprüche, weiter das Anwenden der aktualisierten Abhebeschätzung in mindestens einem Steuersystem des Fahrzeugs umfassend.

13. Verfahren nach Anspruch 12, wobei das mindestens eine Steuersystem ein Fahrzeuggeschwindigkeitsregelungssystem umfasst.

## Revendications

1. Système de prédiction de la propension au soulèvement, comprenant :
un véhicule (10) supporté par au moins un bandage pneumatique de véhicule (12) monté sur un moyeu, le bandage pneumatique de véhicule possédant une cavité de bandage pneumatique (20) et une bande de roulement (16) entrant en contact avec le sol, et le bandage pneumatique (12) possédant un certain nombre de paramètres mesurables spécifiques au bandage pneumatique ;
un dispositif d'identification de bandage pneumatique (24) fixé au bandage pneumatique pour fournir une identification spécifique au bandage pneumatique ;
un certain nombre de capteurs fixés au bandage pneumatique montés sur le bandage pneumatique (12) pour la mesure fonctionnelle des paramètres spécifiques au bandage pneumatique et pour générer des informations concernant des paramètres spécifiques au bandage pneumatique ;
au moins un capteur fixé au véhicule, monté sur le véhicule pour la mesure fonctionnelle de la vitesse (31) du véhicule ;
**caractérisé en ce que** le système comprend un dispositif (42) d'estimation de la propension au soulèvement, pour générer de manière fonctionnelle une propension au soulèvement pour ledit bandage pneumatique de véhicule (12) à partir d'une base de données contenant des propensions au soulèvement spécifiques à l'identification du bandage pneumatique et qui dérivent de l'expérience, mise en corrélation avec des informations concernant des paramètres mesurés spécifiques au bandage pneumatique et avec une vitesse mesurée du véhicule.

2. Système selon la revendication 1, dans lequel les informations concernant des paramètres spécifiques au bandage pneumatique sont choisies parmi le groupe constitué par :
une estimation de la charge pour ledit bandage pneumatique de véhicule (12) ;
la pression de l'air au sein d'une cavité (20) dudit bandage pneumatique de véhicule (12) ; et
une estimation de l'usure pour une zone de bande de roulement dudit bandage pneumatique de véhicule.

3. Système selon la revendication 2, dans lequel les informations concernant la charge sont configurées pour calculer de manière fonctionnelle une estimation de la charge en se basant sur un signal d'accéléromètre de moyeu basé sur le véhicule.

4. Système selon la revendication 1, 2 ou 3, dans lequel le système est configuré pour une mise à jour essentiellement en continu de la propension au soulèvement au cours d'un mouvement du véhicule (10) et de manière facultative dans lequel le système est configuré pour utiliser de manière fonctionnelle la propension au soulèvement mise à jour dans au moins un système de commande du véhicule (10).

5. Système selon la revendication 4, dans lequel ledit au moins un système de commande du véhicule comprend la commande de la vitesse du véhicule.

6. Système selon au moins une des revendications précédentes, dans lequel le système est configuré pour utiliser une entrée d'estimation de charge pour calculer de manière fonctionnelle une estimation de charge en se basant sur un signal d'accéléromètre de moyeu basé sur le véhicule.

7. Système selon au moins une des revendications précédentes, dans lequel le système est configuré pour une mise à jour en continu de la propension estimée au soulèvement au cours du déplacement du véhicule.

8. Procédé pour l'obtention d'une estimation de la propension au soulèvement, le procédé comprenant le fait de :
monter au moins un bandage pneumatique de véhicule (12) sur un véhicule (10), le bandage pneumatique de véhicule possédant une cavité de bandage pneumatique (20) et une bande de roulement (16) entrant en contact avec le sol, et le bandage pneumatique (12) possédant un certain nombre de paramètres mesurables spécifiques au bandage pneumatique ;
fixer audit bandage pneumatique (12) un dispositif d'identification de bandage pneumatique procurant une identification spécifique au bandage pneumatique ;
fixer au véhicule au moins un capteur fixé au véhicule mesurant de manière fonctionnelle la vitesse (31) du véhicule ;
monter un certain nombre de capteurs fixés au bandage pneumatique montés sur le bandage pneumatique mesurant de manière fonctionnelle les paramètres spécifiques au bandage pneumatique dans le but de générer des informations concernant des paramètres spécifiques au bandage pneumatique ;
entrer les informations concernant des paramètres spécifiques au bandage pneumatique ainsi que l'identification spécifique au bandage pneumatique et la vitesse du bandage pneumatique dans un dispositif d'estimation (42) de la propension au soulèvement ;
générer une estimation de la propension au soulèvement à partir du dispositif d'estimation (42) de la propension au soulèvement en utilisant une base de données contenant des propensions au soulèvement spécifiques à l'identification du bandage pneumatique et qui dérivent de l'expérience, mise en corrélation avec des informations concernant des paramètres mesurés spécifiques au bandage pneumatique et avec une vitesse mesurée du véhicule.

9. Procédé selon la revendication 8, comprenant en outre le fait d'inclure dans les informations concernant des paramètres spécifiques au bandage pneumatique une estimation de la charge pour ledit bandage pneumatique de véhicule, la pression de l'air au sein d'une cavité (20) dudit bandage pneumatique de véhicule (12) et une estimation de l'usure pour une zone de bande de roulement dudit bandage pneumatique de véhicule (12).

10. Procédé selon la revendication 8 ou 9, comprenant en outre le fait d'utiliser un signal d'accéléromètre basé sur le véhicule pour générer l'estimation de la charge pour ledit bandage pneumatique de véhicule.

11. Procédé selon la revendication 8, 9 ou 10, comprenant en outre le fait de mettre à jour essentiellement en continu l'estimation de soulèvement en état de marche du véhicule dans le but d'adapter les changements concernant les informations spécifiques au bandage pneumatique.

12. Procédé selon au moins une des revendications précédentes, comprenant en outre le fait d'utiliser l'estimation de soulèvement mise à jour dans au moins un système de commande du véhicule.

13. Procédé selon la revendication 12, dans lequel ledit au moins un système de commande comprend un système de commande de la vitesse du véhicule.
